# EUROPEAN PATENT SPECIFICATION

(11) **EP 2 231 291 B1**
(45) Date of publication and mention of the grant of the patent: **26.10.2011**
(21) Application number: 08849663.3
(22) Date of filing: 17.11.2008
(51) Int. Cl.: A63F 13/06

(54) **MOTORIZED GAME CONTROLLER**
MOTORISIERTE SPIELSTEUERUNG
CONTRÔLEUR DE JEU MOTORISÉ

(30) Priority: 15.11.2007 US 988185 P
(43) Date of publication of application: 29.09.2010
(73) Proprietor: Ergowerx, LLC, Englewood, NJ 07631 (US)
(72) Inventor: ATZMON, Jack, A., Englewood NJ 07631 (US)
(74) Representative: Harrison Goddard Foote
(86) International application number: PCT/US2008/012851
(87) International publication number: WO 2009/064499

(56) References cited:
- WO-A2-2005/103869
- DE-A1- 10 008 025
- JP-A- 2002 102 538
- US-A- 5 727 188
- US-A- 6 036 495
- US-A- 6 042 117
- US-A1- 2001 028 360
- US-A1- 2002 107 061
- US-A1- 2007 155 503
- US-B1- 6 661 403
- US-B1- 6 743 100

## Description

### BACKGROUND OF THE INVENTION

### 1. Field of the Invention

This invention relates to a game controller for a game and more particularly to a motorized game controller.

### 2. Description of the Related Art

A game controller is an input device used to control a video game. A controller is typically connected to a video game console or a personal computer. A game controller can be a keyboard, mouse, gamepad, joystick, paddle, or any other device designed for gaming that can receive input. The game controller is used to govern the movement or actions of an entity in a video or computer game. The type of element controlled depends upon the game, but a typical element controlled would be the actions and movements of a player's character.

### Gamepad

A gamepad, is the most common kind of game controller, held with both hands where the thumbs are used to provide input and can have anywhere from a two buttons to a dozen or more buttons, combined with multiple omnidirectional control sticks. Gamepads generally feature a set of action buttons handled with the right thumb and a direction controller handled with the left. These controls typically give the player control of the game element movements in up to three dimensions, with many buttons to perform quick actions. Due to the ease of use and precision of gamepads, they have spread from traditional consoles where they originated to computers as a common input device.

Most modern game controllers are a variation of a standard gamepad. Some common additions to the standard pad include shoulder buttons placed along the edges of the pad, centrally placed buttons labeled start, select, and mode, and an internal motor to provide force feedback.

Gamepads are the primary means of input on nearly all modern video game consoles. Gamepads are also available for personal computers, but few computer games support gamepads, preferring the more conventional keyboards and mice.

### Paddle

A paddle is a controller that features a round wheel and one or more fire buttons. The wheel is used to typically control movement of the player or an object along one axis of the video screen.

### Joystick

A joystick is a computer peripheral that consists of a handheld stick that can be tilted around either of two axes and (sometimes) twisted around a third.

The joystick typically features a shaft with a sphere-like handle that is grasped, and one or more buttons for in game actions. Generally, the layout has the joystick on the left, and the buttons on the right. There are instances when this is reversed, or the joystick is in the center with button on both sides

### SUMMARY OF THE INVENTION

A problem associated with game controllers is a cramp where strain, muscle fatigue, muscle pain, and the like is felt on the thumbs and palm. This tends to occur mostly when using particularly small controllers or when any finger or hand is kept in an arched position for an extended period of time. Most controllers are designed to generally conform to the relaxed position of the hands. The pronged design of most controllers is based on the relaxed hand position that reduces soreness and cramping after extended use. However, this static design does not sufficiently reduce the occurrence of repetitive stress injuries ("RSI") or carpel tunnel syndrome ("CTS").

WO 2005/103869 discloses a game controller which has a central hub and a pair of wings coupled to the central hub and configured to pivot about at least one axis with respect to the central hub.

US 2001/0028360 discloses a system for use in a handheld activation device for an interactive game wherein at least two handle portions are pivotably and rotationally connected to a support and may be so moved relative to the support under motor control.

The present invention provides a game controller as specified in claim 1 and a method of operating a game controller as specified in claim 8.

### BRIEF DESCRIPTION OF THE DRAWINGS

Figures 1A-1C are a front view of a game controller according to one embodiment of the invention;
Figures 2A-2C are a top view of a game controller according to one embodiment of the invention; and
Figure 3 is a schematic view of the game controller according to one embodiment of the invention.

### DETAILED DESCRIPTION OF THE PRESENT PREFERRED EMBODIMENTS

The controller is the most common way of interacting with a game. According to one embodiment of the invention, the game controller is ergonomically designed so that it is comfortable and its use avoids injuries such as repetitive stress injuries ("RSI") or carpel tunnel syndrome ("CTS").

Disclosed is a game controller that preferably includes one or more ten (10) axis controllers. In one embodiment, using motorization, the controller changes its relative position and angles relative to the user's hand(s). In one embodiment, the housing contacts the user's the palm, and the buttons on the outer surface come in contact with the user's fingers. Two wings of the controller can pivot about an axis. The palm area is adapted to alter its height relative to the finger position. This alters the user's finger and wrist angles. In one embodiment, the finger area will split apart into multiple zones and/or elongate to vary the finger angles in an unlimited number of ways. Such changes in the game controller occur under the control of a microprocessor, a timed controller, a programmed pattern, in accordance with the time used, amount of buttons clicked, by means of temperature, random motion, or in connection with game play changing at different coordinated times within a game. It is through this change that use of the controller can reduce the risks of RSI and CTS.

In one embodiment, the game controller includes a microprocessor. The microprocessor is programmed to analyze the data entry of the user using the game controller including button presses and movements of the 10-axis controller. After a fixed or random number of button presses and/or movements of the 10-axis controller, the microprocessor causes the game controller to change position. In one embodiment, the game controller moves at fixed or random intervals of time. While the game controller preferably utilizes an on-board microprocessor, in other embodiments, the game controller is controlled via the game console or computer to which it is connected. In another embodiment, the game controller is controlled from a central server via a communication network such as the Internet.

In one embodiment, an onboard controller controls the game controller 100. The controller is located in the device or, in the computer or game console to which the game controller is connected. Communication takes place between the controller and the game controller via a WIFI connection, Bluetooth, RS232, USB, firewire, serial communication, parallel communication, or the like. The controller preferably has options such as velocity changes, button height change limitations, and the like; motion is controlled and monitored by switches, sensors, or the like. In one embodiment, the game controller 100 is controlled remotely or by other means either located on board, in the computer, or on a server.

Control software will preferably include, but not be limited to, programming aimed at relieving or preventing a specific disease such as carpal tunnel or other ailments due to repetitive motion. The gradual movements of the game controller 100 and more specifically the wings 104, 106 and the control buttons, eliminate repetitive motion from the same angle thereby improving blood flow, changing position of the median nerve, and resting overworked muscles.

The software programming will preferably monitor repetitive motion on specific buttons and adjust the game controller 100 components accordingly. If a user is constantly focusing on one button or 10-axis controller, then the programming will preferably adjust that section accordingly, moving it more frequently, or various other angles.

The software can be stored on the game controller 100 itself, the computer or game console to which it is attached, a third party computer or a server on the network, a dedicated hardware controller, or on an external source such as a key card or a USB memory card, solid state memory or other storage mechanisms.

In one embodiment, the customization of the software is manipulated by use of pre-programming, settings stored on the computer, game console, server, or by user input. The configuration changes can be made automatically when the user logs on the computer or game console. It can also be automatically configured with the help of biometrics or their personal key cards or identification cards. Once the user is identified, the software, wherever it is stored, can adjust the game controller for that specific user.

Another embodiment could offer hand and wrist rest temperature changes in addition to the other mentioned adaptations to alleviate common hand and wrist and arm ailments. To that end, the controller can be heated to warm a user's hands.

In one embodiment, the game controller 100 works with stored settings on a game console. The user's game controller 100 settings are stored in conjunction with game play. In other words, a game controller 100 profile is maintained to provide customized movement to user.

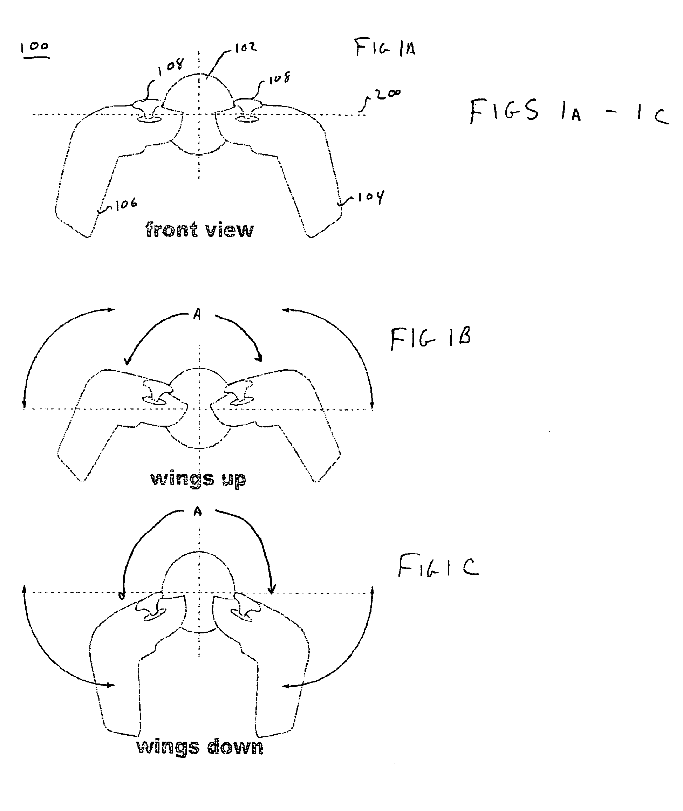

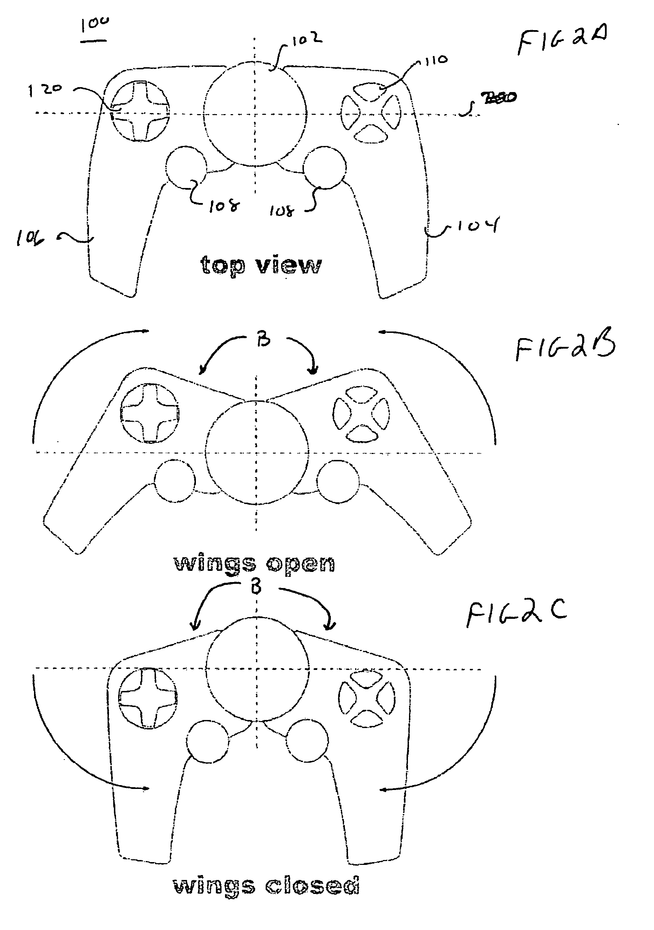

Figure 1A is a front view of a game controller in accordance with one embodiment of the invention. As shown in Figure 1A, a controller 100 includes a center portion 102 and side portions or wings 104 and 106.The side portion or wings 104, 106 are the handles of the game controller. In a preferred embodiment, the wings 104, 106 are molded to a human hand. The wings 104, 106 are adapted to be grasped as is known in the game controller art. Additionally, as shown, controller 100 includes two mutt-axis controllers 108. Multi-axis controllers 108 are preferably 10-axis controllers. Additionally, the controller 100 includes at least one control button and can include a plurality of control buttons (Fig. 2). While the center portion is shown as a ball in the disclosed embodiment, any configuration is possible.

The handle portions 104 and 106 are adapted to be moveable from a rest position shown in Figure 1A. Specifically, the wings 104 and 106 are adapted to move in a direction to increase or decrease an angle A between the angles or wings 104, 106. In a preferred embodiment, a motor is housed in central portion 102. The motor drives a gear train that moves the wings 104, 106. In another embodiment, the wings are driven by magnetic drive. In yet another embodiment, a self-winding spring or a drive mechanism driven by friction, or the like drives the motion.

As shown, during use of game controller 100, the wings 104, 106 move imperceptibly to the user. In another embodiment, the motions are stepped in a manner noticeable by the user. In yet another embodiment, the driving means can disengage so that the wings 104, 106 can be moved as an additional gaming input. The drive means for the wings are disengaged by the game so that the wings are useable as inputs. The user can move the wings 104, 106 to vary the gameplay.

Figures 2A-2C are a top view of controller 100. As shown, the controller 100 includes buttons such as 110 and a rocker button such as 120. The controller 100 begins at an initial rest position shown in Figure 2A. From this initial resting period the wings 104, 106 are adjustable so that an angle B between the wings is decreased as shown in Figure 2B or increased as shown in Figure 2C.

It should be noted that the motion shown in Figures 1A to 1C with angle A being varied and/or the wings being rotated about axis 200 and/or the motion shown in Figures 2A to 2C with Angle B being varied can be performed in combination or independent of one another. Further, the position of the controllers 108 can be varied relative to the position of the wings 104,106. Additionally, the plane of buttons 110 and 120 can be varied with respect to wings 104, 106. In other words, the buttons can be raised or lowered from the surface of the controller. In another embodiment, the buttons 110, 120 are moved along the face of the top surface of the game controller 100.

The wings 104, 106 moved with respect to hub 102 using a motor, springs, gears, piezoelectric elements, magnetic elements, and the like. The power for the motion is drawn from batteries, a USB port, solar power, or the like. In yet another embodiment, a self-winding spring or a drive mechanism driven by friction, or the like drives the motion. In other words, both motorized and non-motorized drive mechanisms can be used.

Wings 104 and 106 change position in response to a number of factors, taken together, in any combination, or individually. Specifically, the factors include, but are not limited to time used, game play, button activation, controller activation, position, and the like. The wings 104, 106 can move in a continuous motion or the motion may be periodic. Further, the wings and or buttons may step through a series of predetermined positions or may make random movements.

In one embodiment, an exercise game is played to exercise the user's hand and fingers to avoid RSI or CTS.

In one embodiment, the controller includes a motion sensor. The motion sensor is adapted both to enhance game play as well as provide an input whereby the controller is controlled so that wings 104, 106 and/or buttons 110,120 are moved.

In one embodiment, the controller 100 includes a controller (not shown) configured to control the motion of the controller 100. The controller can be a microprocessor or other hardware and software adapted to control controller 100. In another embodiment, the motion of the controller is controlled by the gaming hardware. It should be noted that in one embodiment, the motion of wings 104, 106 provides an additional input for game play.

While figures 1A-1C and Figures 2A-2C each depict motion in a single axis, it should be noted that in one embodiment, the wings 104, 106 are also adapted to rotate about axis 200. The wings 104, 106 can pivot about axis 200. Each wing 104, 106 can move simultaneously or individually. In one embodiment, a first wing moves about at last one axis and a second wing moves about another axis. Thus, the wings 104, 106 are adapted to pivot or rotate about at least one axis, and as disclosed, about three axes.

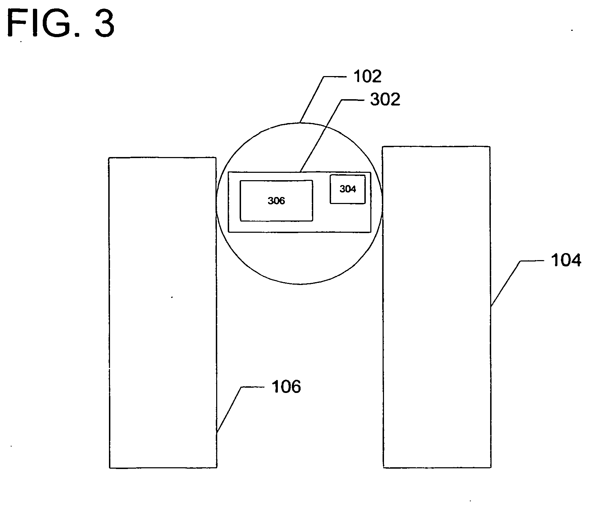

Figure 3 depicts a schematic representation of controller 100. There is a drive 302 in hub 102. In one embodiment, drive 302 comprises driver 304 such as a motor and a gear train 306. Gear train 306 is comprises one or more of a spur gear, a straight or spiral cut bevel gear, a worm gear, a planetary gear, a hypoid gear a helical gear, a herringbone gear, or the like. In one embodiment, a plurality of gear arrangements are utilized to provide motion of wings 104, 106 about three axes with respect to hub 102. In one embodiment, a drive 302 includes a transmission to disengage the motor to allow the user to adjust the wings. It should be noted that in one embodiment, the user sets the wing position. Additionally, the drive 302 is configured to vary the positions of the buttons 110, 120 and multi axis controller 108.

While this invention has been described by reference to a preferred embodiment, it should be understood that numerous changes could be made within the scope of the inventive concepts described. Accordingly, it is intended that the invention not be limited to the disclosed embodiment, but that it have the full scope permitted by the language of the following claims.

## Claims

1. A game controller (100) comprising:
a central hub (102);
a pair of wings (104, 106) coupled to the central hub (102) and configured to pivot about at least one axis with respect to the central hub; **characterised in that**
a drive mechanism (302) is coupled to the pair of wings (104, 106); and is configured to pivot the pair of wings about the at least one axis, and **in that** at least one multi-axis controller (108) and at least one button (110, 120) are mounted to at least one of the pair of wings (104, 106) and the central hub (102) and at least one of the multi-axis controller (108) and the at least one button (110, 1210) is coupled to the drive mechanism (302).

2. The game controller according to claim 1, wherein the pair of wings (104, 106) are configured to pivot about at least two axes with respect to the central hub (102).

3. The game controller according to claim 2 wherein the drive mechanism (302) is configured to pivot the pair of wings (104, 106) about the at least two axes.

4. The game controller according to claim 1 wherein the drive mechanism comprises a motor (304) and a gear train (306).

5. The game controller according to claim 1, wherein the at least one button (110, 120) is configured to be driven by the drive mechanism (302) to raise from a surface of the game controller.

6. The game controller according to claim 1 wherein each of the wings (104, 106) is adapted to move independently.

7. The game controller according to claim 1 wherein the drive mechanism (302) is configured to move the pair of wings (104, 106) in a synchronized manner.

8. A method of operating a game controller (100), the game controller comprising a central hub (102) and a pair of wings (104, 106) coupled to the central hub and configured to pivot about at least one axis with respect to the central hub, a drive mechanism (302) coupled to the pair of wings (104, 106) and at least one multi-axis controller (108) and at least one button (110, 120) mounted to at least one of the pair of wings (104, 106) and the central hub (102), the method comprising:
connecting the game controller (100) to at least one of a computer and a game console;
monitoring parameters including at least one of button presses, time, and wing position;
activating the drive mechanism (302) based on the parameters, the drive mechanism varying the position of at least one of the pair of wings (104, 106) about said at least one axis and of the at least one button (110, 120).

## Patentansprüche

1. Spielsteuerung (100) mit:
einer zentralen Nabe (102);
einem Paar Flügeln (104, 106), die mit der zentralen Nabe (102) gekoppelt und dafür ausgebildet sind, um wenigstens eine Achse in Bezug auf die zentrale Nabe zu schwenken;
**dadurch gekennzeichnet, dass**
ein Antriebsmechanismus (302) mit den beiden Flügeln (104, 106) gekoppelt und dafür ausgebildet ist, die beiden Flügel um die wenigstens eine Achse zu verschwenken, und dass wenigstens ein Mehrachsensteuergerät (108) und wenigstens ein Knopf (110, 120) an wenigstens einem von dem Paar Flügeln (104, 106) und der zentralen Nabe (102) montiert sind und wenigstens einer von dem Mehrachsensteuergerät (108) und dem wenigstens einen Knopf (110, 120) mit dem Antriebsmechanismus (302) gekoppelt ist.

2. Spielsteuerung nach Anspruch 1, wobei die beiden Flügel (104, 106) dafür ausgebildet sind, um wenigstens zwei Achsen in Bezug auf die zentrale Nabe (102) zu schwenken.

3. Spielsteuerung nach Anspruch 2, wobei der Antriebsmechanismus (302) dafür ausgebildet ist, das Paar Flügel (104, 106) um die wenigstens zwei Achsen zu verschwenken.

4. Spielsteuerung nach Anspruch 1, wobei der Antriebsmechanismus einen Motor (304) und einen Getriebezug (306) umfasst.

5. Spielsteuerung nach Anspruch 1, wobei der wenigstens eine Knopf (110, 120) dafür ausgebildet ist, durch den Antriebsmechanismus (302) angetrieben zu werden, um sich von einer Oberfläche der Spielsteuerung zu erheben.

6. Spielsteuerung nach Anspruch 1, wobei jeder der Flügel (104, 106) dafür ausgebildet ist, sich unabhängig zu bewegen.

7. Spielsteuerung nach Anspruch 1, wobei der Antriebsmechanismus (302) dafür ausgebildet ist, das Paar Flügel (104, 106) synchron zu bewegen.

8. Verfahren zum Betreiben einer Spielsteuerung (100), wobei die Spielsteuerung eine zentrale Nabe (102) und ein Paar Flügel (104, 106) umfasst, das mit der zentralen Nabe gekoppelt und dafür ausgebildet ist, um wenigstens eine Achse in Bezug auf die zentrale Nabe zu schwenken, einen Antriebsmechanismus (302), der mit dem Flügelpaar (104, 106) gekoppelt ist, und wenigstens ein Mehrachsensteuergerät (108) und wenigstens einen Knopf (110, 120), der an wenigstens einem bzw. einer von dem Flügelpaar (104, 106) und der zentralen Nabe (102) montiert ist, wobei das Verfahren beinhaltet:
Verbinden der Spielsteuerung (100) mit wenigstens einem von einem Computer und einer Spielkonsole;
Überwachen von Parametern, zu denen wenigstens eine von Knopfbetätigungen, Zeit und Flügelposition gehören;
Aktivieren des Antriebsmechanismus (302) auf der Basis der Parameter,
wobei der Antriebsmechanismus die Position von wenigstens einem des Flügelpaares (104, 106) um die wenigstens eine Achse und von dem wenigstens einen Knopf (110, 120) verändert.

## Revendications

1. Contrôleur de jeu (100) comprenant :
un moyeu central (102) ;
une paire d'ailes (104, 106) couplées au moyeu central (102) et configurées pour pivoter autour d'au moins un axe par rapport au moyeu central ; **caractérisé en ce que** :
un mécanisme d'entraînement (302) est couplé à la paire d'ailes (104, 106) ; et est configuré pour faire pivoter la paire d'ailes autour du au moins un axe, et **en ce qu'**au moins un contrôleur à plusieurs axes (108) et au moins un bouton (110, 120) sont montés sur au moins l'un parmi la paire d'ailes (104, 106) et le moyeu central (102) et au moins l'un parmi le contrôleur à plusieurs axes (108) et le au moins un bouton (110, 1210) est couplé au mécanisme d'entraînement (302).

2. Contrôleur de jeu selon la revendication 1, dans lequel la paire d'ailes (104, 106) est configurée pour pivoter autour d'au moins deux axes par rapport au moyeu central (102).

3. Contrôleur de jeu selon la revendication 2, dans lequel le mécanisme d'entraînement (302) est configuré pour faire pivoter la paire d'ailes (104, 106) autour des au moins deux axes.

4. Contrôleur de jeu selon la revendication 1, dans lequel le mécanisme d'entraînement comprend un moteur (304) et un train d'engrenages (306).

5. Contrôleur de jeu selon la revendication 1, dans lequel le au moins un bouton (110, 120) est configuré pour être entraîné par le mécanisme d'entraînement (302) pour s'élever à partir d'une surface du contrôleur de jeu.

6. Contrôleur de jeu selon la revendication 1, dans lequel chacune des ailes (104, 106) est adaptée pour se déplacer indépendamment.

7. Contrôleur de jeu selon la revendication 1, dans lequel le mécanisme d'entraînement (302) est configuré pour déplacer la paire d'ailes (104, 106) d'une manière synchronisée.

8. Procédé pour actionner un contrôleur de jeu (100), le contrôleur de jeu comprenant un moyeu central (102) et une paire d'ailes (104, 106) couplées au moyeu central et configurées pour pivoter autour d'au moins un axe par rapport au moyeu central, un mécanisme d'entraînement (302) couplé à la paire d'ailes (104, 106) et au moins un contrôleur à plusieurs axes (108) et au moins un bouton (110, 120) monté sur au moins l'un parmi la paire d'ailes (104, 106) et le moyeu central (102), le procédé comprenant les étapes consistant à :
raccorder le contrôleur de jeu (100) à au moins l'un parmi un ordinateur et une console de jeu ;
surveiller des paramètres indiquant au moins l'un parmi les enfoncements du bouton, le temps et la position d'aile ,
actionner le mécanisme d'entraînement (302) en fonction des paramètres, le mécanisme d'entraînement modifiant la position d'au moins l'une de la paire d'ailes (104, 106) autour dudit au moins un axe et dudit au moins un bouton (110, 120).
